# EUROPEAN PATENT SPECIFICATION

(11) **EP 1 570 638 B1**
(45) Date of publication and mention of the grant of the patent: **18.06.2008**
(21) Application number: 03778363.6
(22) Date of filing: 10.12.2003
(51) Int. Cl.: H04M 3/533, H04L 12/58, H04Q 7/38

(54) **METHOD AND APPARATUS FOR REALIZING AN ENHANCED VOICE MESSAGE**
VERFAHREN UND VORRICHTUNG ZUM REALISIEREN EINER ERWEITERTEN SPRACHNACHRICHT
PROCEDE ET DISPOSITIF PERMETTANT DE CREER UN MESSAGE VOCAL AMELIORE

(30) Priority: 11.12.2002 FI 20022176
(43) Date of publication of application: 07.09.2005
(73) Proprietor: Nokia Corporation, 02150 Espoo (FI)
(72) Inventor: VANHATALO, Aki, GU1 4HR Guildford (GB)
(74) Representative: Brax, Matti Juhani
(86) International application number: PCT/FI2003/000939
(87) International publication number: WO 2004/054220

(56) References cited:
- EP-A1- 1 255 416
- EP-A2- 1 113 631
- WO-A1-01/33781
- WO-A1-01/35622
- WO-A2-00/30374
- US-A1- 2001 053 687
- PATENT ABSTRACTS OF JAPAN & JP 2002 335299 A (MEIDENSHA CORP) 22 November 2002

## Description

The invention relates to a method and arrangement for realizing voice messages in a simple and advantageous manner.

At present, telephone answering machines are very popular. Operators offer a corresponding chargeable service for wireless devices. Thus the answering services of mobile phones and other portable devices are realized as a separate network service. A voice message can be left to person called, but not reached, when a voice connection with the desired number could not have been established. After a request for establishing voice connection, a voice connection is attempted to be established between the requesting device and the desired receiving device. In case this does not succeed within a given period of time or after a certain number of trials, connection can be established with the receiver s voicemail box, where a voice message can be recorded through the connection-establishing device.

A voicemail system is a chargeable service maintained by an operator or by some other party. The service provider manages a system located at a given location in the network, and in the system, for each device connected to the system, there is arranged a given storage space for the voice messages to be recorded. The device connected to the system can "open" the recorded voice messages, i.e. listen to them, by calling its voicemail box. Typically the calling party must supply a password in order to ensure that only the authorized person can get hold of the contents of the voicemail box. When a voice message is recorded in the voicemail box, the device managing the voicemail box receives a notice of the received voice message, typically as a text message. A voicemail box is a chargeable service that can be subscribed by the owner. In addition to a possible connecting fee, the owner of the voicemail box pays for each call when he phones to his own voicemail box, i.e. when he listens to the received messages. The person who leaves a message is charged for the time when the connection is open between his device and the voicemail box.

The service means expenses both for the person leaving a message and for the person receiving it. In addition, the service provider must have a system for recording voice messages and an appropriate space for storing said messages.

Naturally the maintenance of the system also uses up the resources of the party that offers the services.

Publication EP 1 113 631 discloses a solution for providing a multimedia messaging service in an integrated broadband communication system. A method according to the disclosed solution comprises the following steps: receiving a message of any media type directed to a subscriber of the integrated broadband communication system, storing a message according to its media type, and providing a message waiting notification to the above-mentioned subscriber. The message waiting notification identifies the media type of the message that is waiting. The media type can be one of the following: text, audio, and multimedia audio and video. The disclosed solution provides a user friendly flexible multimedia messaging service that integrates all types of messages so that a user can be notified of, identify, retrieve, and store all his/her messages with a single service in whatever media the user wishes. The disclosed solution does not, however, simplify and/or improve the realization of voice messages of the kind described above in a wireless environment.

The object of the present invention is to simplify and improve the realization of voice messages in a wireless environment.

The object is achieved so that the voice message for the receiver who was not reached is transmitted as a multimedia message (MM).

The invention is characterized by what is set forth in the characterizing parts of the independent claims. Preferred embodiments of the invention are described in the dependent claims.

According to the invention, the transmission of voice messages is simplified both from the point of view of the sender, the receiver and the operator. In a typical situation, a call is made by a mobile phone in order to establish a voice connection with the receiving device. The voice connection is desired to be established between the caller's device and the receiving device, which is identified by a certain telephone number. A voice connection cannot be established for instance if the receiving device is not located within the coverage area, or if said device is occupied at the moment in question. When for example after a given period of time or a given number of trials it is found out that the connection with the receiving device cannot be established at a certain moment, according to a preferred embodiment of the invention, there is automatically started a multimedia message service (MMS), and in particular, a voice message recording function of said service.

According to a preferred embodiment of the invention, the user of the device that requested the establishment of the connection can record a voice message of a desired length exactly as before, but now - instead of needing to establish a connection with the receiver's voicemail box - the voice message is recorded in a volatile random access memory of the transmitting device. The voice message is recorded and stored as a sound clip of a multimedia message, which sound clip can then be transmitted directly to the receiver as a multimedia message. According to a preferred embodiment, before sending the multimedia message, the user is asked to confirm whether he wants to send the recorded voice message. The user can confirm the transmission, in which case the message is transmitted to the same number with which the user tried to establish a voice connection. According to a preferred embodiment of the invention, the user can, if he so desires, still edit the message prior to the transmission. The produced multimedia message can also be transmitted automatically, when the recording of the sound clip is finished. In case the receiver's device cannot process a sound clip delivered in MMS form, the produced sound clip can be transmitted from a messaging service receiving the receiver's messages further to the receiver's voicemail box.

For the sender, the recordable sound clip of a multimedia message, according to the preferred embodiment of the invention, is easier and more sensible to use than the prior art voicemail box, because the sound clip according to the preferred embodiment of the invention can still be edited even after recording, in case the recorded message does not satisfy the sender. Moreover, the sender need not establish an active connection with another device of the network, such as a voicemail box. The message can be transmitted in the network according to typical message transmission protocols. The receiver of a multimedia message according to a preferred embodiment of the invention receives the message directly in his own device, and he neither needs to take the trouble and phone his voicemail box nor pay for receiving the message. The transmission of a voice message according to a preferred embodiment of the invention is simple and quick and does not require separate locations in the network for storing the messages.

Let us now observe the invention and its preferred embodiments in more detail with reference to the appended drawings, where
- figure 1: is a flow diagram illustrating a method according to a preferred embodiment of the invention,
- figure 2: is a block diagram illustrating a mobile station according to a preferred embodiment of the invention,
- figure 3: illustrates a multimedia message according to a preferred embodiment of the invention, and
- figure 4: illustrates the transmission of messages in an arrangement according to a preferred embodiment of the invention.

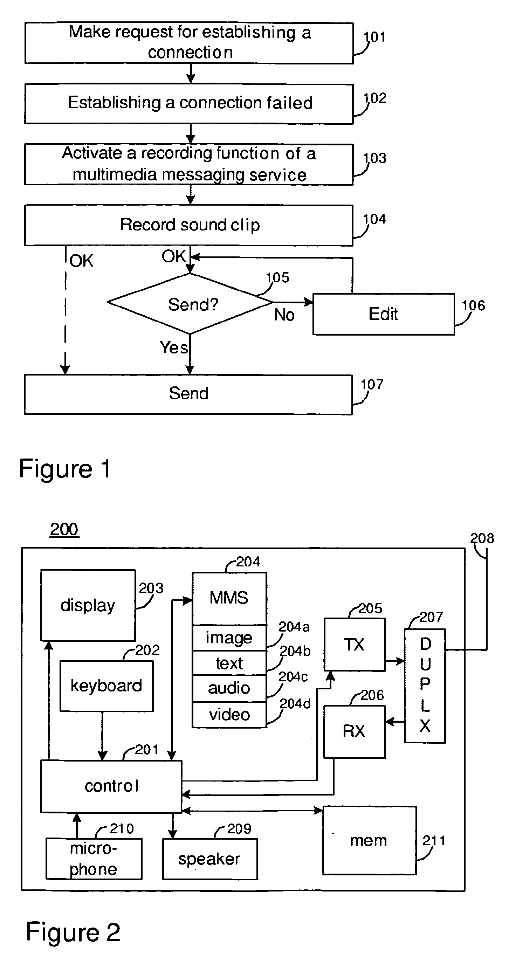

Figure 1 illustrates a method for transmitting multimedia messages. In step 101, there is made a request for establishing a connection with a chosen number of the receiver. Typically the requested connection is a voice connection, but it may also be some other type of connection, where both or all connected devices actively participate, such as for instance a so-called chat connection. The request for establishing connection is made in a typical way, and the requested connection is attempted to be established in a manner known as such. Typically the connection is attempted to be established for the duration of a predetermined period or for a given number of times. The connection cannot be established for instance when the searched receiver is not within the coverage area of the network, or when a connection with the receiving device cannot be established for example because the receiver is already speaking on the phone or because his device is otherwise occupied or closed.

If the connection is successfully established, the connection is made in the usual way between the requesting device and the specified receiving device. The desired receiver can be identified for example on the basis of a telephone number, an identifier (ID) or an address (URI, Uniform Resource Identifier). In case the connection was not established in step 101, but the attempt failed 102, in step 103 there is automatically started, according to a preferred embodiment of the invention, a multimedia messaging service (MMS), and the sound clip recording function of said service is activated. The user of the device that requested the connection can directly start recording a voice message. The voice message dictated by the user, i.e. a so-called sound clip, is recorded in step 104 in the random access memory of the device as a sound clip of a multimedia message. The recorded sound clip forms part of a multimedia message, and the defined receiver of said message is the same receiver with whom the connection was attempted to be established in step 101. According to a preferred embodiment of the invention, the receiver information and the multimedia message containing the sound clip are automatically produced. In addition, according to a preferred embodiment of the invention, at the beginning of the multimedia message there is added an identifier by which the operator and/or the receiving device can recognize a multimedia message according to the invention from an ordinary multimedia message that is not produced automatically. The created multimedia message is stored in the volatile random access memory of the device.

According to a preferred embodiment of the invention, the created multimedia message is sent 107 automatically to the receiver with whom the connection was earlier attempted to be established. In figure 1, the operation according to said embodiment is illustrated as a dotted line. According to another preferred embodiment, when the multimedia message to be transmitted, containing the sound clip, is produced in step 104, the user is once more asked in step 105 to confirm whether the produced multimedia message should be sent to the receiver. The user may accept the sending in step 105, whereafter the multimedia message is transmitted to the receiver in step 107. If the user does not accept transmission directly in step 105, the created multimedia message can still be edited in step 106. In step 106, the user can for instance add in the multimedia message, apart from the recorded sound clip, also pictures, text or video image. The recorded voice message can be edited, or it can be completely deleted, or the receiver's connection information can be edited. In step 106, it is possibly to edit all features of the multimedia message that in general can be edited. When the desired corrections are completed, step 105 is resumed, and the user is once again asked to confirm the transmission of the message prior to transmitting said message to the receiver in step 107. The multimedia message to be transmitted can be further edited after step 105, before step 107, by returning to step 106.

The created multimedia message is typically delivered to the same receiver, with whom the connection was originally attempted to be established. It is assumed that the receiving device is capable of processing and receiving multimedia messages. In case the multimedia message cannot be received by the device to which the message was sent, the multimedia message can, according to a preferred embodiment, be further sent to the receiver's voicemail box. According to a preferred embodiment of the invention, the operator can recognize a multimedia message according to the invention from a regular message by means of an identifier included in the message, said identifier indicating that said message is produced automatically after a failed attempt of establishing a connection. Multimedia messages received in a messaging server or in the receiving device can also be processed in various different ways on the basis of the identifier provided at the beginning of the message. In a network, messages are typically transmitted between messaging servers. According to a preferred embodiment of the invention, the receiver's messaging server can transmit the multimedia message further to the receiver's voicemail box, if the multimedia message is identified as a voice message according to the invention, or if the receiver is not capable of receiving a multimedia message or if he for example does not within a certain period of time fetch the received multimedia message from his messaging server. Regular multimedia messages, that are not identified as voice messages according to the invention, can be directed from the messaging server for example to a given www page, in case the device defined as the receiver is not capable of receiving them.

Figure 2 illustrates a device 200 according to a preferred embodiment of the invention. Typically the device 200 is a wireless communication device, such as a mobile phone, that can be used for establishing a connection with the receiving device. In order to establish connections, the device 200 comprises an antenna 208, a duplexer, i.e. a transceiver 207, a transmission branch 205 typically comprising a transmission unit, an A/D converter and an amplifier, and a reception branch 206 typically comprising a reception unit, a D/A converter and an amplifier. The exemplary data input elements illustrated in the device 200 include a keyboard 202 and a microphone 210. In addition to these, typical data input elements are various touch surfaces, touch pens and touch displays. Often the device 200 also includes a camera for feeding picture data. As data presentation means, the device 200 comprises a display screen 203 and a loudspeaker 209. In addition, the device may include various units for producing and reproducing sound, as well as other units for presenting data. Moreover, the device 20.0 comprises a control unit 201 for processing data and for controlling the operation of all components of the device. The memory unit 211 includes both base memory for storing data and volatile random access memory. In addition, the device 200 comprises a multimedia messaging service (MMS) 204, which according to a preferred embodiment of the invention can be started automatically, in case the requested voice connection between the device 200 and the receiving device cannot be established. In particular, in that case there is started the recording function of the sound clip 204c of the multimedia messaging service. The multimedia messaging service 204 of the device 200 generally includes elements for processing a voice message 204c, a picture message 204a, a text message 204b and video image 204d. According to a preferred embodiment, the recording of a voice message 204c is started automatically, and the obtained result is a sound clip of the multimedia message, which is stored in the volatile random access memory of the memory unit 211.

In a preferred embodiment, the control unit 201 of the device 200 includes a determination, according to which the created multimedia message is automatically transmitted to the number of the receiver who was not reached in spite of attempts. In that case the device 200 comprises elements for automatically transmitting the multimedia message containing the sound clip to said number of the receiver with which a voice connection was attempted to be established. According to another preferred embodiment, the control unit 201 includes elements for asking the sender to confirm the transmission typically on the display 203 of the device 200. The user can confirm the transmission for instance by selecting the OK-alternative on the keyboard 202, whereafter the multimedia message is transmitted to the receiver under control of the control unit 201, through the transmission branch 205, the duplexer 207 and the antenna 208.

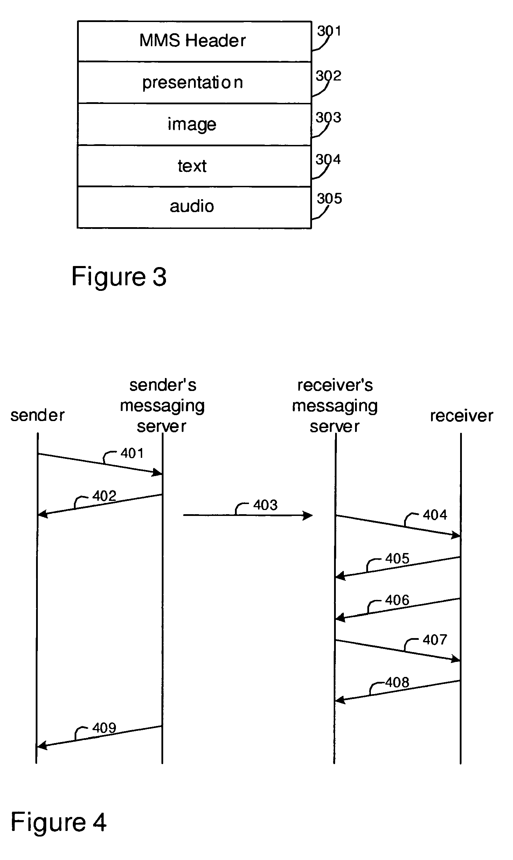

Figure 3 illustrates a multimedia message according to a preferred embodiment. The multimedia message includes a header, i.e. an identifier 301 containing mainly information as to how, in what form and according to which protocol the multimedia message is transmitted from the transmitting device to the receiving device. The header 301 may also include an identifier by which the multimedia message is identified as an automatically created multimedia message according to the invention. Said identifier that is preferably included in the message automatically may also be located in some other part of the multimedia message, for instance in the text element 304. The presentation element 302 includes instructions for presenting the contents of the multimedia message in the display, loudspeakers and other presentation means of the device. The presentation element 302 defines in which order, for how long, how and by which tools each multimedia message element is presented. The presentation element 302 can be realized for example in the SMIL (Synchronized Multimedia Integration Language) or WML (Wireless Markup Language) programming language. There can even be several presentation elements 302, but in that case one of them is a so-called root element, which is indicated by means of a so-called start parameter. The presentation element 302 is an optional part of the multimedia message. In case the multimedia message does not at all include a presentation element 302, the contents of the multimedia message are presented according to the parameters of the presenting device. A multimedia message according to the embodiment illustrated in figure 3 also includes multimedia message elements among which there are illustrated by way of example a picture element 303, a text element 304 and an audio element 305. In addition to these, a multimedia message may include various other multimedia message elements. The mutual order of the multimedia message elements is of no importance, because they are presented in a way defined in the presentation element 302. The presentation element 302 and the multimedia message elements 303, 304 and 305 together constitute the body of the multimedia message.

The multimedia messages to be sent are transmitted from the transmitting device to the sender's messaging server. The messaging server, i.e. so-called proxy server, is located in the network and communicates interactively with the messaging unit or messaging program of the transmitting device. When transmitting multimedia messages between a messaging server and a mobile station, there are used the WAP (Wireless Application Protocol) and WSP/HTTP (Wireless Session Protocol / Hypertext Transfer Protocol) protocols. Also in an external Internet network, multimedia messages are transmitted according to the typical transmission protocols between the messaging servers of the sender and the receiver.

Figure 4 illustrates the transmission of messages in an arrangement according to a preferred embodiment of the invention. In figure 4, the sender and the receiver are mobile devices, for instance devices 200 as illustrated in figure 2. When the sender wishes to send a message, the transmitting mobile station transmits a message sending request 401 to its messaging server. In connection with the message sending request, there also is transmitted a multimedia message to the messaging server. From the sender's messaging server, the multimedia message is sent to the receiver's messaging server 403 through a public network. The sender's messaging server further sends to the sender a confirmation that the multimedia message was transmitted 402 further.

The receiver's messaging server receives the transmitted multimedia message and sends a notification message of the received multimedia message to the receiver 404. At this stage, the receiver only receives identification information of the multimedia message. The multimedia message proper, complete with the body, is still located in the receivers messaging server. After receiving the notification message 404, the receiver can automatically fetch the multimedia message from a location in the messaging server, said location being indicated in the notification message. If the receiver does not want to fetch the newly arrived multimedia message immediately, he sends to the messaging server a reception notification message 405 in order to confirm that he has received the notification message. When the receiver later wishes to fetch the received multimedia message from the messaging server, he sends a fetch request message 406 to that effect to the messaging server. The messaging server transmits the multimedia message, complete with the body, to the receiver 407. The receiver receives the multimedia message and sends to the messaging server a notification 408 to confirm that the multimedia message is received. Depending on the determinations, there can still be sent a confirmation 409 to the sender that the message was sent to the receiver.

According to a preferred embodiment, in the receiver's messaging server there arrives a multimedia message 403, and a respective notification message 404 is sent to the chosen receiver. In case the multimedia message includes an identifier, on the basis of which it is identified as a multimedia message according to the present invention, said information can be transmitted to the chosen receiver along with the notification message 404. In case the receiver is not capable of receiving a multimedia message, this can be indicated to the messaging server in a reception notification 405. As a consequence, according to a preferred embodiment of the invention the messaging server converts the sound clip of the multimedia message into a regular voice message and delivers it to the receiver's voicemail box. Thereafter the messaging server sends to the receiver, in a known fashion, a notification of a received voicemail message. According to another preferred embodiment, the receiver can prevent the transmission of the multimedia message to his device. Also in this case, the sound clips originally transmitted to the messaging server as multimedia messages according to a preferred embodiment of the invention can be delivered to the receiver through a conventional voicemail box. On the basis of the identifier provided in the multimedia message according to a preferred embodiment of the invention, the multimedia message can be transmitted for example directly from the messaging server to the receiver's voicemail box or to a www page. Advantageously the editions and rerouting of the multimedia message are realized in a programmed process in the messaging server.

According to a preferred embodiment of the invention, the messaging service only directs the multimedia message to the receiver's voicemail box, in case the receiver is not willing or capable of receiving the multimedia message. In this embodiment, the voicemail box located in the network may receive also multimedia messages, and particularly when opening voice messages it can process a multimedia message sound clip into a similar audio reproduction as a normal voice message. According to another embodiment, multimedia messages can be directed from the messaging server directly or according to the instructions of the receiving device to a given www page. According to a preferred embodiment, the multimedia message according to the invention can be identified by an operator, a messaging server and/or a receiving device on the basis of a given identifier included in the multimedia message. Thus identified multimedia messages can be further processed in various different ways, or for instance with different priorities than ordinary multimedia messages.

## Claims

1. A method for transmitting a voice message, the method comprising:
- making (101) a request in a device for establishing a connection with a receiver,
**characterized in that** the method further comprises:
- as a response to a failed attempt (102) for establishing the connection, automatically starting (103) a multimedia messaging service (MMS) of the device and activating a recording function of a sound clip,
- recording (104) the voice message as a sound clip of a multimedia message into a volatile random access memory of the device, and
- transmitting (107) the multimedia message to the receiver.

2. A method according to claim 1, **characterized in that** it includes a step of including an identifier in the multimedia message by which identifier the multimedia message can be identified as created automatically as a response to a failed attempt for establishing a connection.

3. A method according to claim 1, **characterized in that** it includes a step of attaching (106) in the multimedia message, in addition to the sound clip, one of the following: text, picture, video image or a combination of these.

4. A method according to claim 1, **characterized in that** the multimedia message containing the recorded sound clip is automatically transmitted to the receiver.

5. A method according to claim 1, **characterized in that** the multimedia message containing the recorded sound clip is transmitted to the receiver as a response to confirming the message sending function (105).

6. A method according to claim 1, **characterized in that** the multimedia message is transmitted to the number to which the original request for establishing connection was made.

7. A method according to claim 1, **characterized in that** the multimedia message is transmitted to the voicemail box of the number to which original request for establishing a connection was made.

8. A device for transmitting a voice message, the device comprising:
- means (201, 202, 205, 207, 208) for making a request for establishing a connection targeting to a receiver,
**characterized in that** the device further comprises:
- means (204, 204c) for starting a multimedia messaging service (MMS) of the device and for activating a recording function of a sound clip of said service automatically as a response to a failed attempt for establishing the connection,
- means (201, 204, 204c, 210) for recording the voice message as a sound clip of a multimedia message into a volatile random access memory (211) of the device, and
- means (201, 205, 207, 208) for transmitting the multimedia message to the receiver.

9. A device according to claim 8, **characterized in that** the device includes means for adding to the multimedia message an identifier indicating that the multimedia message was created automatically.

10. A device according to claim 8, **characterized in that** the device also includes means for attaching to the multimedia message, in addition to the sound clip (204c), text (204b), picture (204a), video image (204d) or a combination of these.

11. A device according to claim 8, **characterized in that** it includes means for transmitting the created multimedia message automatically to the number of the receiver to which the original request for establishing a connection was made.

12. A device according to claim 8, **characterized in that** it includes means for transmitting the created multimedia message as a response to confirming the multimedia message transmission function.

13. A device according to claim 8, **characterized in that** it includes means for transmitting the multimedia message to the number to which the original request for establishing a connection was made.

14. A device according to claim 8, **characterized in that** it includes means for transmitting the multimedia message to a voicemail box connected to the number to which the original request for establishing a connection was made.

15. A device according to claim 8, **characterized in that** said means are programmatic means.

16. A computer program for transmitting a voice message, the computer program comprising:
- programmatic means for making (101) a request in a device for establishing a connection targeting to a receiver,
**characterized in that** the computer program further comprises:
- programmatic means for starting (102) a multimedia messaging service (MMS) of the device and for activating a recording function of a sound clip (103) of said service automatically as a response to a failed attempt for establishing the connection,
- programmatic means for recording (104) the voice message as a sound clip of a multimedia message into a volatile random access memory of the device, and
- programmatic means for transmitting (107) the multimedia message to the receiver.

## Patentansprüche

1. Verfahren zum Übertragen einer Sprachnachricht, wobei das Verfahren umfasst:
- Ausführen (101) einer Anforderung in einer Vorrichtung, eine Verbindung mit einem Empfänger aufzubauen;
**dadurch gekennzeichnet, dass** das Verfahren weiter umfasst
- als eine Reaktion auf einen fehlgeschlagenen Versuch (102), die Verbindung aufzubauen, automatisches Starten (103) eines Multimedianachrichtendienstes (MMS) der Vorrichtung und Aktivieren einer Aufzeichnungsfunktion eines Sound Clips;
- Aufzeichnen (104) der Sprachnachricht als einen Sound Clip einer Multimedianachricht in einem flüchtigen Direktzugriffsspeicher der Vorrichtung; und
- Übertragen (107) der Multimedianachricht an den Empfänger.

2. Verfahren nach Anspruch 1, **dadurch gekennzeichnet, dass** es einen Schritt einschließt, eine Kennung in der Multimedianachricht einzuschließen, wobei durch die Kennung die Multimedianachricht identifiziert werden kann als automatisch erzeugt als eine Reaktion auf einen fehlgeschlagenen Versuch, eine Verbindung aufzubauen.

3. Verfahren nach Anspruch 1, **dadurch gekennzeichnet, dass** es einen Schritt einschließt, zusätzlich zu dem Sound Clip, der Multimedianachricht eines der folgenden anzufügen (106):
Text, Bild, Videobild oder eine Kombination davon.

4. Verfahren nach Anspruch 1, **dadurch gekennzeichnet, dass** die Multimedianachricht, die den aufgezeichneten Sound Clip enthält, automatisch an den Empfänger übertragen wird.

5. Verfahren nach Anspruch 1, **dadurch gekennzeichnet, dass** die Multimedianachricht, die den aufgezeichneten Sound Clip enthält, als eine Reaktion auf ein Bestätigen der Nachrichtensendefunktion (105) an den Empfänger übertragen wird.

6. Verfahren nach Anspruch 1, **dadurch gekennzeichnet, dass** die Multimedianachricht an die Nummer übertragen wird, an welche die ursprüngliche Anforderung zum Aufbauen der Verbindung ausgeführt wurde.

7. Verfahren nach Anspruch 1, **dadurch gekennzeichnet, dass** die Multimedianachricht an die Voicemailbox der Nummer übertragen wird, an welche die ursprüngliche Anforderung zum Aufbauen der Verbindung ausgeführt wurde.

8. Vorrichtung zum Übertragen einer Sprachnachricht, wobei die Vorrichtung umfasst:
- Mittel (201, 202, 205, 207, 208) zum Ausführen einer Anforderung, eine Verbindung aufzubauen, die an einen Empfänger gerichtet ist;
**dadurch gekennzeichnet, dass** die Vorrichtung weiter umfasst
- Mittel (204, 204c) zum Starten eines Multimedianachrichtendienstes (MMS) der Vorrichtung und zum Aktivieren einer Aufzeichnungsfunktion eines Sound Clips des Dienstes automatisch als eine Reaktion auf einen fehlgeschlagenen Versuch, die Verbindung aufzubauen;
- Mittel (201, 204, 204c, 210) zum Aufzeichnen der Sprachnachricht als einen Sound Clip einer Multimedianachricht in einen flüchtigen Direktzugriffsspeicher (211) der Vorrichtung; und
- Mittel (201, 205, 207, 208) zum Übertragen der Multimedianachricht an den Empfänger.

9. Vorrichtung nach Anspruch 8, **dadurch gekennzeichnet, dass** die Vorrichtung Mittel einschließt, um der Multimedianachricht eine Kennung hinzuzufügen, die angibt, dass die Multimedianachricht automatisch erzeugt wurde.

10. Vorrichtung nach Anspruch 8, **dadurch gekennzeichnet, dass** die Vorrichtung auch Mittel einschließt, um der Multimedianachricht zusätzlich zu dem Sound Clip (204c) Text (204b), Bild (204a), Videobild (204d) oder eine Kombination davon anzufügen.

11. Vorrichtung nach Anspruch 8, **dadurch gekennzeichnet, dass** sie Mittel einschließt, um die erzeugte Multimedianachricht automatisch an die Nummer des Empfängers zu übertragen, an den die ursprüngliche Anforderung, eine Verbindung aufzubauen, ausgeführt wurde.

12. Vorrichtung nach Anspruch 8, **dadurch gekennzeichnet, dass** sie Mittel einschließt, um die erzeugte Multimedianachricht als eine Reaktion auf ein Bestätigen der Multimedianachrichten-Übertragungsfunktion zu übertragen.

13. Vorrichtung nach Anspruch 8, **dadurch gekennzeichnet, dass** sie Mittel zum Übertragen der Multimedianachricht an die Nummer einschließt, an welche die ursprüngliche Anforderung, eine Verbindung aufzubauen, ausgeführt wurde.

14. Vorrichtung nach Anspruch 8, **dadurch gekennzeichnet, dass** sie Mittel einschließt, um die Multimedianachricht an eine Voicemailbox zu übertragen, die mit der Nummer verbunden ist, an welche die ursprüngliche Anforderung, eine Verbindung aufzubauen, ausgeführt wurde.

15. Vorrichtung nach Anspruch 8, **dadurch gekennzeichnet, dass** die Mittel Programm-Mittel sind.

16. Computerprogramm zum Übertragen einer Sprachnachricht, wobei das Computerprogramm umfasst:
- Programm-Mittel zum Ausführen (101) einer Anforderung in einer Vorrichtung, eine Verbindung aufzubauen, die an einen Empfänger gerichtet ist;
**dadurch gekennzeichnet, dass** das Computerprogramm weiter umfasst:
- Programm-Mittel zum Starten (102) eines Multimedianachrichtendienstes (MMS) der Vorrichtung und zum Aktivieren einer Aufzeichnungsfunktion eines Sound Clips (103) des Dienstes automatisch als eine Reaktion auf einen fehlgeschlagenen Versuch, die Verbindung aufzubauen;
- Programm-Mittel zum Aufzeichnen (104) der Sprachnachricht als einen Sound Clip einer Multimedianachricht in einen flüchtigen Direktzugriffsspeicher der Vorrichtung; und
- Programm-Mittel zum Übertragen (107) der Multimedianachricht an den Empfänger.

## Revendications

1. Procédé pour transmettre un message vocal, le procédé comprenant :
- l'exécution (101) d'une demande dans un dispositif pour établir une connexion avec un récepteur,
**caractérisé en ce que** le procédé comprend en outre :
- en réponse à une tentative échouée (102) pour établir la connexion, le démarrage automatique (103) d'un service de messagerie multimédia (MMS) du dispositif et l'activation d'une fonction d'enregistrement d'un clip sonore,
- l'enregistrement (104) du message vocal comme un clip sonore d'un message multimédia dans une mémoire vive volatile du dispositif et
- la transmission (107) du message multimédia au récepteur.

2. Procédé selon la revendication 1, **caractérisé en ce qu'**il comprend une étape consistant à inclure un identificateur dans le message multimédia, par lequel identificateur le message multimédia peut être identifié comme créé automatiquement en réponse à une tentative échouée pour établir une connexion.

3. Procédé selon la revendication 1, **caractérisé en ce qu'**il comprend une étape consistant à joindre (106) dans le message multimédia, en plus du clip sonore : un texte, une image, une image vidéo ou une combinaison de ceux-ci.

4. Procédé selon la revendication 1, **caractérisé en ce que** le message multimédia contenant le clip sonore enregistré est automatiquement transmis au récepteur.

5. Procédé selon la revendication 1, **caractérisé en ce que** le message multimédia contenant le clip sonore enregistré est transmis au récepteur en réponse à la confirmation de la fonction d'envoi de message (105).

6. Procédé selon la revendication 1, **caractérisé en ce que** le message multimédia est transmis au numéro vers lequel la demande originale pour établir une connexion a été effectuée.

7. Procédé selon la revendication 1, **caractérisé en ce que** le message multimédia est transmis à la boîte vocale du numéro vers lequel la demande originale pour établir une connexion a été effectuée.

8. Dispositif pour transmettre un message vocal, le dispositif comprenant :
- des moyens (201, 202, 205, 207, 208) pour effectuer une demande pour établir une connexion visant un récepteur,
**caractérisé en ce que** le dispositif comprend en outre :
- des moyens (204, 204c) pour démarrer un service de messagerie multimédia (MMS) du dispositif et pour activer une fonction d'enregistrement d'un clip sonore dudit service automatiquement en réponse à une tentative échouée pour établir la connexion,
- des moyens (201, 204, 204c, 210) pour enregistrer le message vocal comme un clip sonore d'un message multimédia dans une mémoire vive volatile (211) du dispositif, et
- des moyens (201, 205, 207, 208) pour transmettre le message multimédia au récepteur.

9. Dispositif selon la revendication 8, **caractérisé en ce que** le dispositif comprend des moyens pour ajouter au message multimédia un identificateur indiquant que le message multimédia a été créé automatiquement.

10. Dispositif selon la revendication 8, **caractérisé en ce que** le dispositif comprend également des moyens pour joindre au message multimédia, en plus du clip sonore (204c), un texte (204b), une image (204a), une image vidéo (204d) ou une combinaison de ceux-ci.

11. Dispositif selon la revendication 8, **caractérisé en ce qu'**il comprend des moyens pour transmettre le message multimédia créé automatiquement au numéro du récepteur vers lequel la demande originale pour établir une connexion a été effectuée.

12. Dispositif selon la revendication 8, **caractérisé en ce qu'**il comprend des moyens pour transmettre le message multimédia créé en réponse à la confirmation de la fonction de transmission de message multimédia.

13. Dispositif selon la revendication 8, **caractérisé en ce qu'**il comprend des moyens pour transmettre le message multimédia au numéro vers lequel la demande originale pour établir une connexion a été effectuée.

14. Dispositif selon la revendication 8, **caractérisé en ce qu'**il comprend des moyens pour transmettre le message multimédia à une boîte vocale connectée au numéro vers lequel la demande originale pour établir une connexion a été effectuée.

15. Dispositif selon la revendication 8, **caractérisé en ce que** lesdits moyens sont des moyens programmatiques.

16. Programme informatique pour transmettre un message vocal, le programme informatique comprenant :
- des moyens programmatiques pour effectuer (101) une demande dans un dispositif en vue d'établir une connexion visant un récepteur,
**caractérisé en ce que** le programme informatique comprend en outre :
- des moyens programmatiques pour démarrer (102) un service de messagerie multimédia (MMS) du dispositif et pour activer une fonction d'enregistrement d'un clip sonore dudit service automatiquement en réponse à une tentative échouée pour établir la connexion,
- des moyens programmatiques pour enregistrer (104) le message vocal comme un clip sonore d'un message multimédia dans une mémoire vive volatile du dispositif, et
- des moyens programmatiques pour transmettre (107) le message multimédia au récepteur.
